# EUROPEAN PATENT APPLICATION

(11) **EP 2 289 647 A1**
(43) Date of publication of application: **02.03.2011**
(21) Application number: 09169014.9
(22) Date of filing: 31.08.2009
(51) Int. Cl.: B21H 3/02, F16B 25/10

(54) **Method for manufacturing self-tapping screw with helical chip discharge channel and self-tapping screw**

(71) Applicant: Chao, Ying-Chin, Yen Chao Hsiang Kaohsiung Hsien (TW)
(72) Inventor: Chao, Ying-Chin, Yen Chao Hsiang Kaohsiung Hsien (TW)
(74) Representative: Horak, Michael

(57) **Abstract**

Disclosed is a method for manufacturing a screw (4) with helical chip discharge channel, including providing a blank (41), subjecting an end of the blank to form a head (42) and subjecting the blank to rolling to form one or more sections of threads (43). The screw (4) is formed with one or more helical chip discharge channels (442), which can be of different helical angle according the different applications. The chip discharge channel (442) can be formed by milling, rolling, or combined rolling and milling. The chip discharge channel is extended into the threads (43) to form tapping edges. As such, the tapping operation is made effortless and the shape of the tapped thread excellent. The extending angle of the chip discharge channel (442) can be changed according to different materials of the workpiece to be fastened. The length of the chip discharge channel can be selected according to different applications.

## Description

### (a) Technical Field of the Invention

The present invention generally relates to a method for manufacturing a screw with a chip discharge channel and a product thereof, and more particularly to a method for manufacturing a self-drilling screw or a self-tapping screw that is used to joint to objects and a screw manufactured with the method.

### (b) Description of the Prior Art

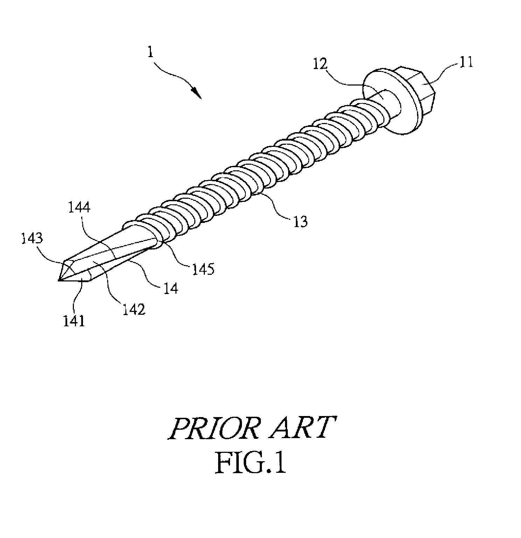

To joint two objects or to joint a steel plate and a non-ferrous material, a self-drilling screw or a self-tapping screw is often used. The advantage of the self-drilling screw or the self-tapping screw is that it can secure objects without making a hole or tapping a hole in advance so that it is often used to secure a corrugated steel plate roofing, wooden furniture, steel cabinets, fences, and aluminum doors/windows. A brief description of the self-drilling screw and the self-tapping screw will be given below. FIG 1 of the attached drawings shows a conventional< self-drilling screw, which, generally designated at 1, comprises a head 11 and a shank 12 extending from a bottom of the head 11. The shank 12 has a circumferential surface forming external threads 13. The screw 1 has a tip end forming a drilling bit section 14, which has an end forming a conic surface 141. The conic surface 141 forms in the circumference thereof two inclined chip discharge channels 142 that are symmetrically arranged. The chip discharge channels 142 intersect the conic surface 141 and the circumference of the drilling bit section 14 to respectively form drilling edges 143 and cutting edges 144. To carry out fastening operation with the screw 1, the drilling edges 143 and the cutting edges 144 cut into and remove a portion of the material of an obj ect so as to guide the external threads 13 of the self-drilling screw 1 to gradually penetrate into the object. Meanwhile, the material chips that are removed during the fastening operation are discharged by moving upward of the drilling bit section 14 along the chip discharge channels 142 to eventually realize fastening and positioning.

However, although this known self-drilling screw 1 provides two symmetric chip discharge channels 142 in the drilling bit section 14, the cutting edges 144 are arranged at the intersections between the chip discharge channels 142 and the circumference of the drilling bit section 14. This makes the chip discharge channels 142 terminating at the intersection thereof with the first turn of the threads, which form ends 145 of the channels. Consequently, the remaining turns of the threads are not provided with any chip discharge space and the material chips removed by the cutting operation induced by fastening the screw may get jammed due to being blocked by the channel ends 145, which may lead to high temperature that leads to tempering and blunting of the drilling edges 143. Eventually, the drilling edges 143 are no longer capable to carry out further cutting and may even get broken. Further, most turns of the threads are not provided with chip discharge channels and thus, they cannot form a tapping edge to facilitate insertion of the screw so that the threads are often forcibly pushed into the workpiece, leading to poor fastening.

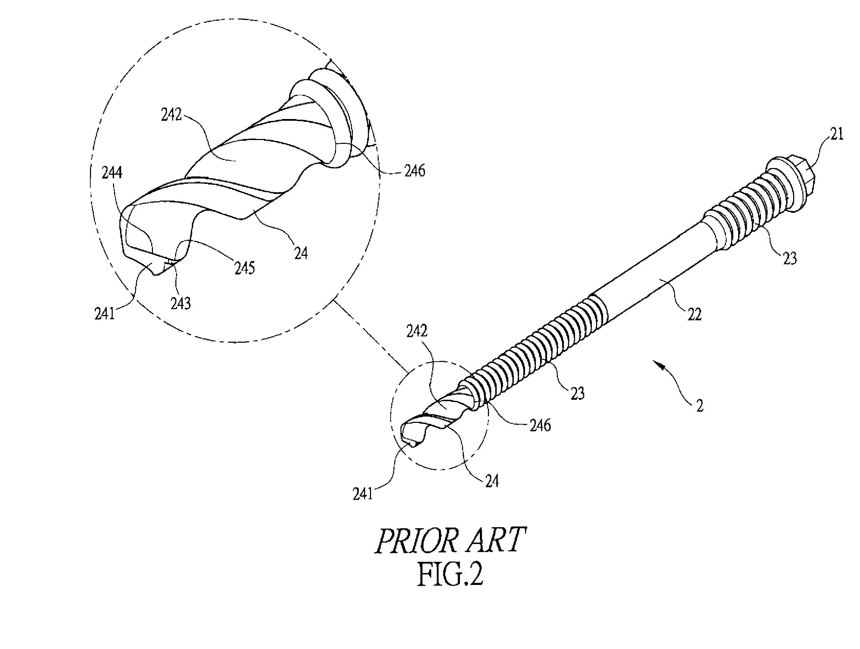

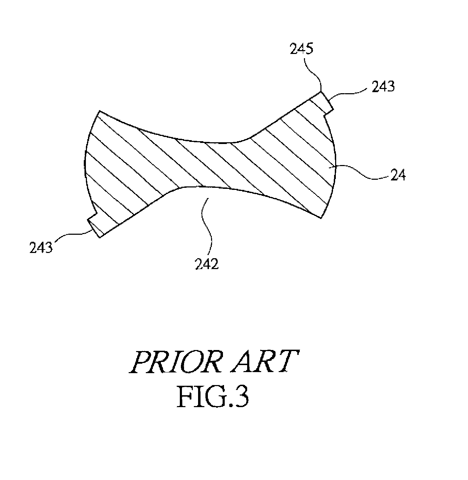

Taiwan Patent Application Nos. 96215648 and 96119066, which respectively disclose an improved structure of self-drilling screw and a method for manufacturing a self-drilling screw and a product thereof, are illustrated in FIGS. 2 and 3. The self-drilling screw 2 illustrated in these documents comprises a head 21 and a shank 22 extending from a bottom of the head 21. The shank 22 has a circumferential surface forming two sections of external threads 23 and has a free end forming a drilling bit section 24. The drilling bit section 24 has an end forming a conic surface 241, which forms in the circumference thereof two inclined chip discharge channels 242 that are symmetrically arranged and also forms a lip 243 that has a substantially square or rectangular cross-section on the circumference adjacent to one bank of each chip discharge channel 242, as shown in FIG 3. The chip discharge channels 242 intersect the conic surface 241 and the lips 243 to respectively form drilling edges 244 and cutting edges 245.

To carry out fastening operation with the known self-drilling screw 2, the drilling edges 244 and the cutting edges 245 cut into and remove a portion of the material of an object so as to guide the external threads 23 of the self-drilling screw 2 to gradually penetrate into the object. Meanwhile, the material chips that are removed during the fastening operation are discharged by moving upward of the drilling bit section 24 along the inclined chip discharge channels 242. With the opposite lips 243 formed on the circumference of the drilling bit section 24, a chip discharge space is formed around the circumference of the drilling bit section 24 to facilitate discharging of chips and thus prevent over heating caused by chip jamming.

The above described structure of the known self-drilling screw 2 is effective in realizing fastening the screw. However, the opposite lips 243 are formed on the circumference of the drilling bit section 24 and the lips 243 form an outside diameter that is greater than the outside diameter of the drilling bit section 24. A fastening operation with the self-drilling screw is often carried out by manually operated power tools so that due to the vibration of the screw itself in the course of fastening and the scrapping effect induced by the cutting edges 245 of the lips 243, when the drilling bit section 24 cuts into an object, a hole, which is made in the object, must be of a slightly expanded diameter, making it substantially corresponding to the outside diameter of the threads 23 thereby leading to poor fastening result. Further, in the manufacturing of the self-drilling screw 2, two jigs are employed to respectively and securely hold an unthreaded bar-like blank and an end of the drilling bit section 24 for twisting a predetermined angle, so as to make the chip discharge channels 242 and the cutting edges 245 of the drilling bit section 24 symmetrically helical. Afterwards, the bar-like blank is subjected to formation of the external threads 23 on the circumference thereof. Consequently, the chip discharge channels 242 can only be formed to terminate at the intersection thereof with the first turn of the threads 23, which form ends 246 of the channels, and the channels do not extend to the remaining turns of the threads 23. In this method of manufacturing, if the chip discharge channels 242 are to be extended into the threads, due to the twisting operation that forms the chip discharge channels 242, the external threads 23 that are formed earlier than the chip discharge channels 242 would be deformed to change the distance between adjacent turns of the thread, or in case that the chip discharge channels 242 are formed earlier than the threads, then the formation of the threads would cause excessive material generated by rolling of the thread crest to jam the chip discharge channels 242 and thus blocking the chips to be discharged, so that the cutting edges 245 do not have sharp edges and the performance of discharging chips and tapping is reduced.

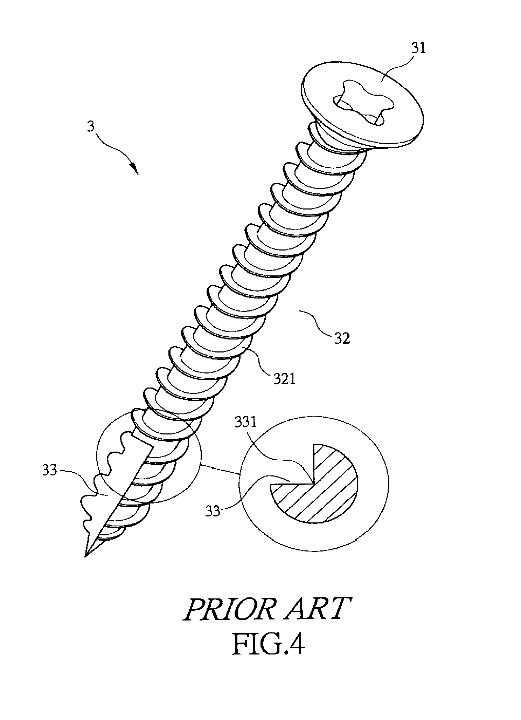

FIG 4 shows a conventional self-tapping screw 3, which is used in jointing wooden objects or metal boards with holes, comprising a head 31, a shank 32 extending from a bottom of the head 31, and a chip discharge channel 33. The shank 32 forms threads 321 thereon and the chip discharge channel 33 is formed by milling a groove in a lower section of the shank 32 that has been threaded. With the chip discharge channel 33, when the self-tapping screw 3 is fastened in an object, the self-tapping screw 3 cuts a portion of material from the object that is discharged through the chip discharge channel 33 to facilitate the penetration of the self-tapping screw 3.

Although the self-tapping screw 3 is effective in tapping and screwing into an object to fasten the object, yet the chip discharge channel 33 is of a configuration having a 90-degree included angle 331. Due to the external diameter chord length of the milling blade, the chip discharge channel 33 is often made very short, around 12mm, and this length of the chip discharge channel is apparently insufficient for discharging chips for long screws. Thus, when the conventional self-tapping screw 3 is applied to tap a hole of an object, the chips generated by the tapping operation will be curved by the thread 321 of the shank 32 and residual chips will be blocked by the included angle of the chip discharge channel 33 to build up or jam due to the short chip discharge channel and cannot be smoothly discharged through the chip discharge channel 33, leading poor discharging of the chips in the self-tapping screw 3, eventually affecting the screwing and tapping operation of the self-tapping screw 3 and possibly causing improper shape of the tapped thread and poor fastening.

In view of the above discussed self-drilling screws 1 and 2 and the self-tapping screw 3, it is a challenge of the mechanical part manufacturers to develop and provide a screw that may simply the manufacturing thereof, prevent the expansion of hole, and smoothly discharge chips.

### SUMMARY OF THE INVENTION

The primary objective of the present invention is to provide a method for manufacturing a screw with helical chip discharge channel. The method first provides a round-bar like metal material, and uses a screw forming machine to cut the round-bar like metal material into a blank of a predetermined length. The bar is subjected to pressing operation by a pressing machine to form a head. The bar is then subjected to rolling with a thread rolling machine to form one or more sections of threads. A free end of the threaded bar is rolled or milled to form a drilling bit section and at least one helical chip discharge channel. The chip discharge channel may have any desired helical angle according to different applications. As such, a product of a screw which has a with helical chip discharge channel extending into the thread section to form tapping edges is made.

Another objective of the present invention is to provide a self-drilling screw with helical chip discharge channel. After a blank is provided, the blank is cut into a bar of a predetermined length. An end of the bar is subjected to pressing to form a head. The bar is then subjected to rolling to form one or more sections of threads. In the course of the rolling operation, a drilling bit, the threads, and the chip discharge channel are formed simultaneously with the chip discharge channel extending into the thread section. The helical drilling bit section of the screw is processed by rolling to form the one or more helical chip discharge channels and the chip discharge channels are of the length extending into the threads of the thread sections to form tapping edges. As such, the tapping edges of the threads may serve as cutting surfaces for tapping operation so as to improve the functions of chip discharging and secured fastening of the self-drilling screw.

A further obj ective of the present invention is to provide a self-tapping screw. After a blank is provided, the blank is cut into a bar of a predetermined length. An end of the bar is subjected to pressing to form a head. The bar is then subjected to rolling to form threads. The bar is processed to form one or more helical chip discharge channels by milling or rolling so as to form tapping edges. As such, the tapping edges of the threads may serve as cutting surfaces for tapping operation so as to improve the quality of thread tapping and the smoothness of chip discharging of the self-drilling screw, as well as secured fastening thereof.

A further obj ective of the present invention is to provide a self-tapping screw of which the manufacturing method is that after a blank is cut to a predetermined length, an end of the blank is subjected to pressing to form a head and a body of the blank is subjected to rolling of threads. One or more helical chip discharge channels are formed at the same time that a middle portion of the blank is carried out thread rolling. Afterwards, a milling blade further cuts the chip discharge channel that does not extend to the end of the blank to have the new cut portion jointing to and communicating the chip discharge channel. This composite machining process makes tapping edges formed by the tail end chip discharge channel effort saving and the discharging of chip smoother, and the fastening more secured.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a perspective view of a conventional self-drilling screw.
FIG 2 is a perspective view of another conventional self-drilling screw.
FIG 3 is a cross-sectional view showing a drilling bit section of the self-drilling screw of FIG. 2.
FIG 4 shows a perspective view and a cross-sectional view of a conventional self-tapping screw.
FIG 5 is a flow chart showing a method for manufacturing a screw in accordance with the present invention.
FIG 6 shows perspective views demonstrating the method for manufacturing a self-drilling screw in accordance with the present invention.
FIG 7 is a perspective view of the self-drilling screw manufactured with the method shown in FIG 6.
FIG 8 is a cross-sectional view showing a drilling bit section of the self-drilling screw of the present invention.
FIG 9 shows perspective views demonstrating the method for manufacturing a self-tapping screw in accordance with the present invention.
FIG 10 is a perspective view of an embodiment of the self-tapping screw of the present invention.
FIG 11 shows perspective views demonstrating the method for manufacturing another self-tapping screw in accordance with the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

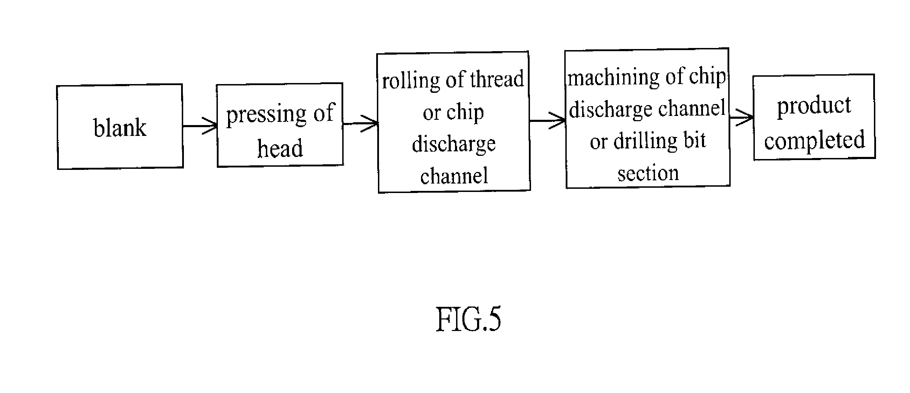

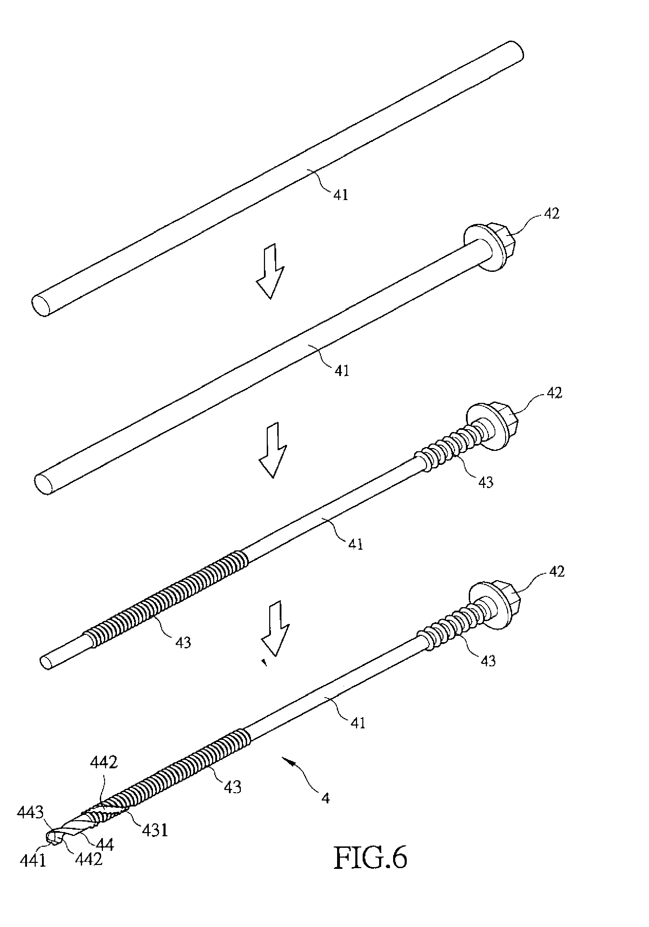

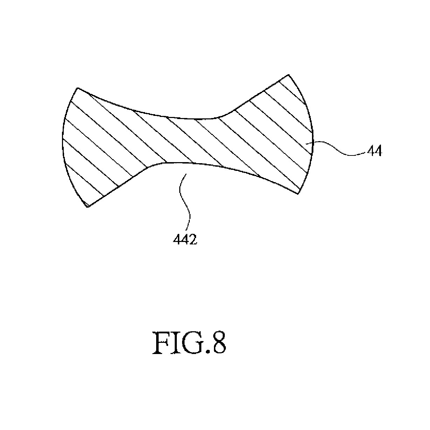

Referring to FIGS. 5 and 6, the present invention provides a method for manufacturing a screw, and the method will be described in details by taking a self-drilling screw, which is designated at 4, as an example. A suitable length of blank is provided first. The blank is a round bar like metal material. The blank is first cut to a bar 41 of a predetermined length with a screw forming machine. The bar 41 is then subjected to pressing at one end thereof to form a head 42 having an expanded diameter. A thread rolling machine is then employed to form one or more sections of threads 43 on the bar 41. Finally, milling operation is performed on the threaded bar 41 to form a helical drilling bit section 44 and chip discharge channels 442 extending into the threads. The drilling bit section 44 has a conic surface 441. The drilling bit section 44 has a circumferential surface in which two helical chip discharge channels 442, which are symmetrically arranged, are formed. The two chip discharge channels 442 intersect the conic surface 441 to form drilling edges 443 and the chip discharge channels 442 extends into the threads to form threaded cutting edges 431. The drilling bit section 44 has an outside diameter that shows a cylindrical configuration as shown in FIG 8. And, no lip 243 of the conventional screw as shown in FIG 3 is provided, whereby the cylindrical outer circumference may function as a guide and prevent expansion of hole.

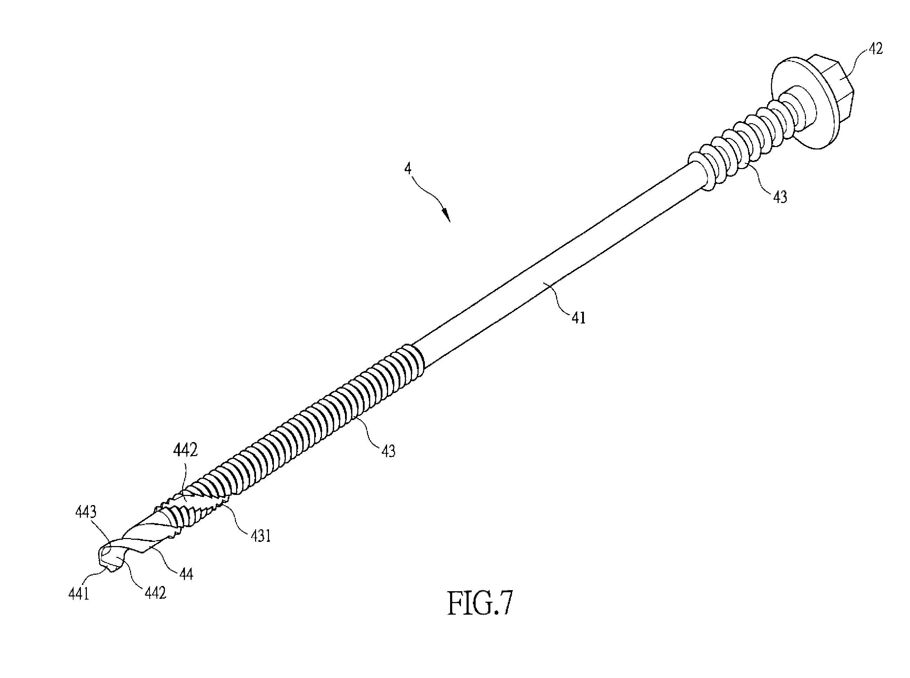

Referring to FIG 7, to practice the present invention, in milling the drilling bit section 44, the milling operation is performed in such a way that the chip discharge channels 442 are also formed by milling to extend into the threads of the thread section 43. In this way, the tapping edges 431 of the thread section 43 may serve as cutting surfaces in tapping thread of a hole in an object or workpiece to improve the performance and quality of tapping operation by the self-drilling screw 4. In this way, the chip discharge channels 442 can be extended in a non-limited way and this cannot be realized by the known techniques and improves the poor performance of chip discharging of the conventional self-drilling screws. Besides forming the drilling bit section 44 and the chip discharge channels 442 with milling operation, it is also possible to form the drilling bit section 44 and the chip discharge channels 442 with the same rolling operation that rolls the threads so as to have the chip discharge channels 442 extending into the thread section 43.

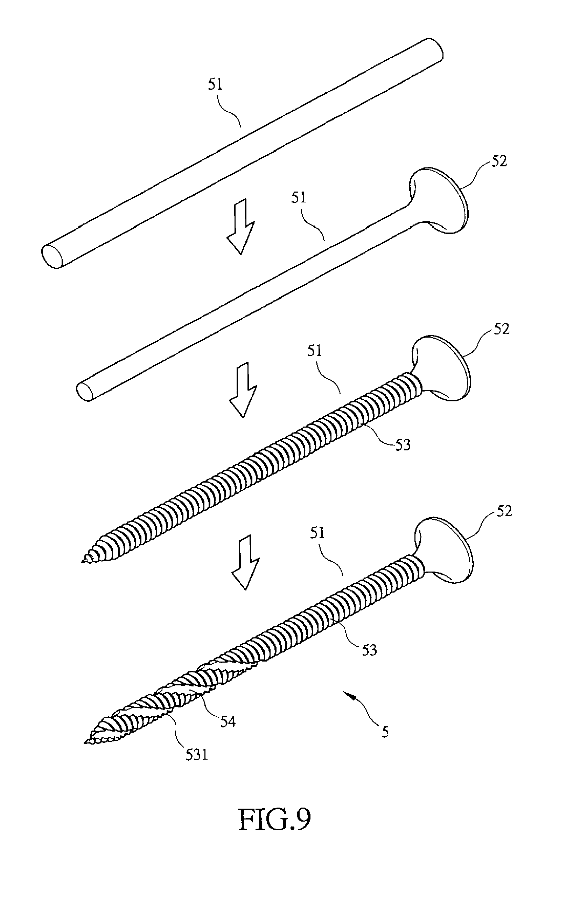

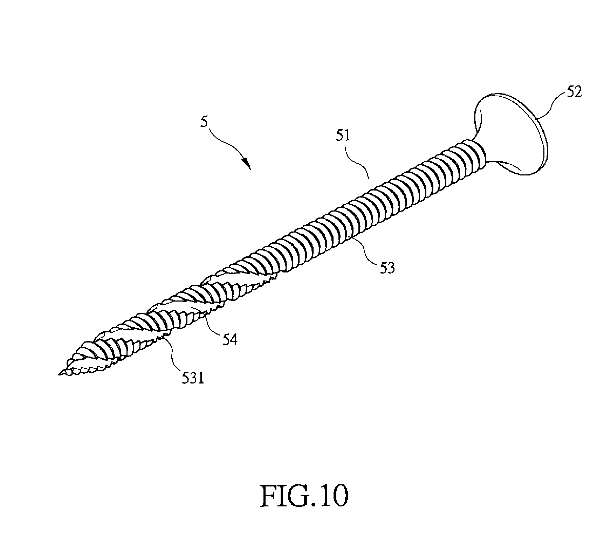

Referring to FIG 9, which shows another embodiment of the present invention, in which a self-tapping screw 5 is taken as example for explanation, a suitable length of blank is provided first. The blank is a round bar like metal material and is cut to a bar 51 of a predetermined length with a screw forming machine. The bar 51 is then subjected to pressing at one end thereof to form a head 52 having an expanded diameter. A thread rolling machine is then employed to form a section of threads 53 on the bar 51. An end of the threads is a sharp tip or a flat tip. In the embodiment, one or more chip discharge channel 54 are formed in helical form by milling after thread rolling or by the same rolling operation of the thread rolling so as to form tapping edges 531 in the thread section 53, as shown in FIG 10. In this way, the portion of the chip discharge channel 54 in the thread section 53 forms the tapping edges 531 to serve as cutting surfaces in tapping thread of a hole in an object or workpiece so as to improve the performance of chip discharging and secured fastening of the self-tapping screw 5. In this way, the chip discharge channels 54 of the self-tapping screw 5 can be extended to adjacent to a neck of the threaded bar. This has never been done by the conventional self-tapping screws.

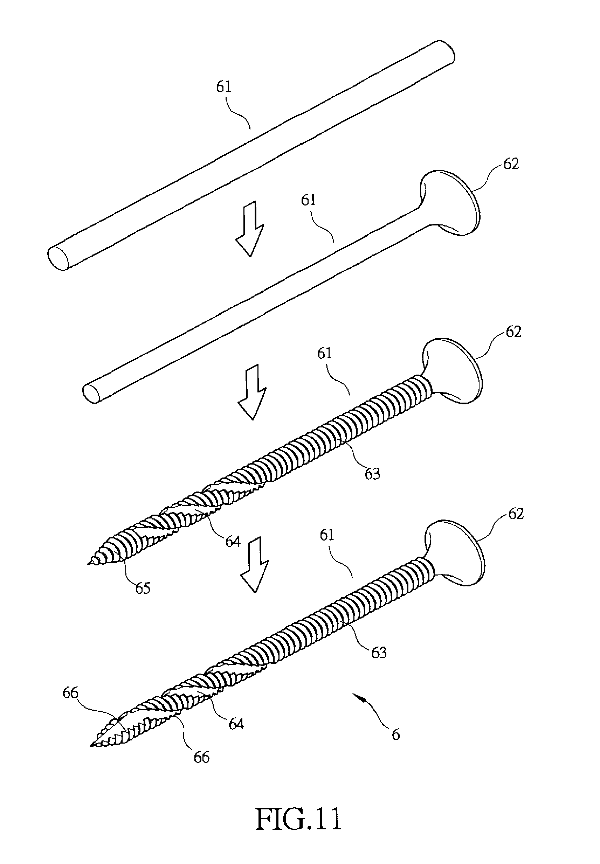

Referring to FIG 11, which shows a further embodiment of the present invention, in which a self-tapping screw is taken as example for explanation, a metal round bar like material 61 is provided first. A head forming machine is employed to apply pressing operation to an end of the bar 61 to form a head 62 having an expanded diameter. A thread rolling machine is then employed to carry out thread rolling on the bar 61 so as to simultaneously form a section of thread 63 that has a chip discharge channel 64 at a middle portion thereof and a thread tail section 65 having a sharp tip or a flat tip. In the rolling-completed threaded bar, the chip discharge channel 64 that is formed by rolling is only present in the middle portion of the thread section 63 and does not extend to the thread tail section 65. The rolling-completed threaded section 63 is then subjected to milling by a blade that is put to align to the already formed chip discharge channel 64 to form tail section tapping edges 66 which aligns to and extends from the previously formed chip discharge channel 64. The self-tapping screw 6 made in this way allows the chip discharge channels 64 to extend in a non-limited manner in the rolling operation and the tapping edges 66 that are formed by milling are very sharp. This composite manufacturing method is thus suitable for manufacturing high-class self-tapping screws and this method has never been known before.

Referring to FIGS. 6 and 7, the effectiveness of the present invention is that after the blank of the screw 4 is prepared, an end of the blank is pressed to form a head 42 and a thread section 43 of a suitable length is formed by rolling on the threaded bar 41, and one or more chip discharge channels 442 are formed by milling or rolling in such a way that the chip discharge channels 442 are milled into the threads of the thread section 43 to form tapping edges 431. In this way, by using the side walls of the chip discharge channels that extend into the threads to form tapping edges serving as cutting surface in tapping a hole in a workpiece, smoothness of discharging chips of the self-tapping screw is improved and functions of tapping and secured fastening are also realized. Further, the drilling bit section 44 of the present invention does not have lips 243 that are of substantially square or rectangular cross section by one side wall of the chip discharge channel as shown in the conventional screws of FIGS. 2 and 3, so that no hole expansion will occur when the drilling bit section 44 is cutting a workpiece and secured fastening an object can be realized.

To summarize, the present invention provides a method for manufacturing a screw having a chip discharge channel and a product thereof, which effectively overcome the problem of chip jamming in the conventional self-drilling screws and self-tapping screws due to the chip discharge channel being tool short and improves the smoothness of chip discharging, saves effort in tapping a hole, provides excellent shape of tapped thread, and securely fastens an object.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A method for manufacturing a self-drilling screw with helical chip discharge channel, comprising providing a round-bar like metal material, which is processed by a screw forming machine to provide a bar of a predetermined length; subjecting the bar to pressing operation by a pressing machine to form a head; subjecting the bar to rolling with a thread rolling machine to form one or more sections of threads; and milling a free end of the threaded bar to form a drilling bit section and at least one helical chip discharge channel having a predetermined helical angle.

2. The method according to claim 1, wherein the chip discharge channel extends into the thread section to form tapping edges in the thread section.

3. The method according to claim 1, wherein the drilling bit section and the chip discharge section are formed by rolling.

4. The method according to claim 1, wherein the drilling bit section and the chip discharge section are formed by milling.

5. The method according to claim 1, wherein the number of the chip discharge channel is one or more than one.

6. A method for manufacturing a self-tapping screw with helical chip discharge channel, comprising providing a round-bar like metal material, which is processed by a screw forming machine to provide a bar of a predetermined length; subjecting the bar to pressing operation by a pressing machine to form a head; subjecting the bar to rolling with a thread rolling machine to form a section of threads; and forming at least one helical chip discharge channel in the thread section, the helical chip discharge channel having a predetermined helical angle, whereby a product of a self-tapping screw with helical chip discharge channel is manufactured.

7. The method according to claim 6, wherein the chip discharge channel has a length extending close to the head.

8. The method according to claim 6, wherein the chip discharge channel is formed by rolling or milling.

9. The method according to claim 6, wherein the number of the chip discharge channel is one or more than one.

10. The method according to claim 1, wherein the chip discharge channel is formed by a composite process of first rolling and then milling.

11. A self-tapping screw having an expanded head, a shank extending from a bottom of the head, the shank forming a section of threads, the self-tapping screw having a tail section forming at least one helical chip discharge channel.

12. The self-tapping screw according to claim 11, wherein the chip discharge channel has a length extending close to the head.

13. The self-tapping screw according to claim 11, wherein the number of the chip discharge channel is one or more than one.
